# EUROPÄISCHE PATENTSCHRIFT

(11) **EP 1 698 505 B1**
(45) Veröffentlichungstag und Bekanntmachung des Hinweises auf die Patenterteilung: **05.05.2010**
(21) Anmeldenummer: 06002893.3
(22) Anmeldetag: 14.02.2006
(51) Int. Cl.: F16D 43/18

(54) **Antriebseinheit für ein Hybridfahrzeug**
Drive unit for hybrid vehicle
Dispositif d'entrainement pour véhicule hybride

(30) Priorität: 02.03.2005 DE 102005009447
(43) Veröffentlichungstag der Anmeldung: 06.09.2006
(73) Patentinhaber: MTU FRIEDRICHSHAFEN GMBH, 88045 Friedrichshafen (DE)
(72) Erfinder: Groddeck, Michael, 88074 Meckenbeuren (DE); Huster, Joachim, 88048 Friedrichshafen (DE)

(56) Entgegenhaltungen:
- DE-A1- 19 915 926
- DE-C1- 4 128 297
- US-A1- 2003 078 135

## Beschreibung

Die Erfindung betrifft eine Antriebseinheit für ein Hybridfahrzeug zur Koppelung einer Brennkraftmaschine und/oder einer Elektromaschine mit einem Getriebe nach dem Oberbegriff von Anspruch 1.

Aus der DE 43 23 601 A1 ist eine Antriebseinheit für ein Hybridfahrzeug bekannt, welche eine Eingangswelle, eine Einscheiben-Trockenkupplung, eine Ausgangswelle und einen Starter-Generator enthält. Die Eingangswelle wird von der Brennkraftmaschine angetrieben. Innerhalb der Antriebseinheit ist die Eingangswelle mit der Primärseite der Kupplung verbunden. Die Ausgangswelle führt auf das Getriebe. Innerhalb der Antriebseinheit ist die Ausgangswelle mit der Sekundärseite der Kupplung und dem Starter-Generator verbunden. Bei geschlossener Kupplung besteht ein Kraftfluss von der Brennkraftmaschine über die Eingangswelle und die Kupplung auf die Ausgangswelle. Der Schaltzustand der Kupplung wird über einen Ausrückstößel, ein Ausrücklager und eine in axialer Richtung wirkende Schließfeder bestimmt. Bei der elektromotorischen Betriebsweise ist die Kupplung deaktiviert, um die Brennkraftmaschine vom Starter-Generator zu entkoppeln. Hierzu wird die Schließfeder im nichtschließenden Zustand gehalten, d. h. über den Ausrückstößel und das Ausrücklager muss eine entsprechend hohe, permanent wirkende Kraft aufgebracht werden. Eine Fehlerabsicherung bei Ausfall der Hilfsenergie zum Offenhalten der Kupplung in der elektromotorischen Betriebsweise ist nicht dargestellt.

Aus der DE 199 15 926 A1 ist eine Antriebseinheit für ein Hybridfahzeug bekannt. Innerhalb eines Gehäuses sind eine mit der Brennkraftmaschine gekoppelte Antriebswelle, eine Getriebeeingangswelle, eine Kupplung zur Kraftübertragung von der Antriebswelle auf die Getriebeeingangswelle, ein Starter-Generator und ein Planetengetriebe angeordnet. Der Starter-Generator ist über das Planetengetriebe mit der Antriebswelle oder mit der Getriebeeingangswelle in Wirkverbindung, so dass auch mit relativ kleinen Starter-Generatoren große Brennkraftmaschinen angelassen werden können. In einer ersten Ausführungsform ist die Kupplung fremdbetätigt mit einem entsprechenden Ausrücker. In einer zweiten Ausführungsform ist die Kupplung als Einscheiben-Trockenkupplung ausgeführt. Ergänzend sind zwei fliehkraftbetätigte Kupplungen zur Beeinflussung des Planetengetriebe-Hohlrads angeordnet, wodurch eine veränderbare Übersetzung des Planetengetriebes erreicht wird. Beiden Ausführungsformen ist gemeinsam, dass im verbrennungsmotorischen Betrieb das Motormoment über die Kupplung auf die Getriebeeingangswelle übertragen wird, daher hat die Kupplung einen entsprechenden Platzbedarf und unterliegt einem Verschleiß.

Aus der gattungsbildende US 2003/0078135 A1 sind diverse Ausführungsformen für einen Hybridantrieb bekannt. Die gemeinsamen Elemente sind eine Brennkraftmaschine mit einer Antriebswelle, eine Ausgangswelle, welche auf ein Differential führt, eine erste Elektromaschine (Starter-Generator), welche über eine Zahnradstufe mit der Ausgangswelle gekoppelt ist und eine zweite Elektromaschine (Starter-Generator), welche über eine Zahnradstufe mit der Antriebswelle gekoppelt ist. In einer Ausführungsform ist vorgesehen, dass die Ausgangswelle mit der Antriebswelle über eine fliehkraftbetätigte Kupplung und einem im Sinne von Kraftfluss parallel angeordneten Freilauf gekoppelt ist. Zum Starten der Brennkraftmaschine wird die erste Elektromaschine aktiviert. Die erste Elektromaschine treibt über die Zahnradstufe die Ausgangswelle an. Sobald die Ausgangswelle eine entsprechende Drehzahl erreicht hat, schließt die fliehkraftbetätigte Kupplung. Bei geschlossen Kupplung sind die Ausgangswelle und die Antriebswelle nebst Brennkraftmaschine gekoppelt, so dass sich die Brennkraftmaschine zu drehen beginnt. Im verbrennungsmotorischen Betrieb wird das Motormoment der Brennkraftmaschine über die geschlossene Kupplung auf das Differential übertragen. Da auch bei dieser Fundstelle das Motormoment im verbrennungsmotorischen Betrieb über die fliehkraftbetätigte Kupplung übertragen wird, baut diese entsprechend groß. Auf Grund der schematisierten Blockschaltbilder lassen sich konstruktive Ausführungen aus dieser Fundstelle nicht ableiten.

Aufgabe der Erfindung ist es daher, die Antriebseinheit bei möglichst wenig Bauraum sicherer zu gestalten.

Die Aufgabe wird durch die Merkmale von Patentanspruch 1 gelöst. Die Ausgestaltungen sind in den Unteransprüchen dargestellt.

Bei der dargestellten Antriebseinheit sind zumindest die Einganswelle, der Starter-Generator, die Ausgangswelle, die Kupplung sowie der Freilauf innerhalb der Antriebseinheit angeordnet. Hierbei ist die Kupplung drehzahlabhängig von der Ausgangswelle. Parallel zur Kupplung ist ein Freilauf angeordnet. Bei der Kupplung handelt es sich um eine Fliehkraftkupplung, welche im geschlossenen Zustand den Freilauf sperrt. Im verbrennungsmotorischen Betrieb ist die Kupplung vollständig geöffnet und wird das von der Brennkraftmaschine abgegebene Moment ausschließlich über den Freilauf auf die Ausgangswelle übertragen. Die Kupplung besteht aus Reibbacken zur reibschlüssigen Verbindung der Eingangswelle mit der Ausgangswelle, Fliehgewichten zur Festlegung des Reibschlusses der Reibbacken und Federn zum Ausüben einer Federkraft auf die Reibbacken. Die Reibbacken, die Fliehgewichte und die Federn sind drehfest mit der Ausgangswelle verbunden, wodurch die Drehzahlabhängigkeit dargestellt wird. Über eine Nocke wirken die Fliehgewichte auf die entsprechende Reibbacke in der Art ein, dass bei einer Drehzahl oberhalb eines Grenzwerts, zum Beispiel 500 Umdrehungen, der Reibschluss zwischen der Reibbacke und der Eingangswelle aufgehoben wird.

In einer Ausführungsform der Erfindung ist vorgesehen, dass die Kupplung, also die Reibbacken, Fliehgewichte sowie Federn, um die Eingangswelle angeordnet sind. Die Federn üben eine in zentripetaler Richtung wirkende Federkraft auf die Reibbacken aus. Alternativ hierzu ist vorgesehen, dass die Kupplung innerhalb der Eingangswelle angeordnet ist, wobei die Federn eine in zentrifugaler Richtung wirkende Federkraft auf die Reibbacken ausüben.

Zur Unterdrückung von Torsionsschwingungen ist optional vorgesehen, dass zwischen dem Rotor des Starter-Generators und der Eingangswelle eine metallelastische Kupplung angeordnet ist, zum Beispiel eine Geislinger-Kupplung. Bei dieser Ausführungsform stützt sich dann der Freilauf an der Eingangswelle und an der metallelastischen Kupplung ab.

Bei der Antriebseinheit nach der Erfindung werden ausschließlich passive Elemente zur Steuerung der Übergänge zwischen den unterschiedlichen Betriebsweisen verwendet. Betätigungsmedien, zum Beispiel Hydraulikfluid, sind nicht notwendig. Durch die passiven Bauelemente ist die Antriebseinheit sehr robust und betriebssicher.

Beim verbrennungsmotorischen Betrieb wird das von der Brennkraftmaschine abgegebene Moment ausschließlich über den Freilauf übertragen. Lediglich beim Startvorgang der Brennkraftmaschine mittels des Starter-Generators überträgt die Kupplung ein Moment. Dieses Anlassmoment ist jedoch wesentlich geringer als das von der Brennkraftmaschine gelieferte Maximalmoment. Die Kupplung benötigt daher wenig Bauraum. Bei der Umsetzung der Erfindung werden Standard-Bauteile verwendet.

In den Zeichnungen sind die bevorzugten Ausführungsbeispiele dargestellt.

Es zeigen:
- Fig. 1: Eine Antriebseinheit im Schnitt, erste Ausführung;
- Fig. 2: Ein Schnittbild der Figur 1, Linie II-II;
- Fig. 3: Ein Schnittbild der Figur 1, Linie III-III;
- Fig. 4: Eine Antriebseinheit im Schnitt, zweite Ausführung;
- Fig. 5A, 5B: Ein Schnittbild der Figur 4, Linie V-V.

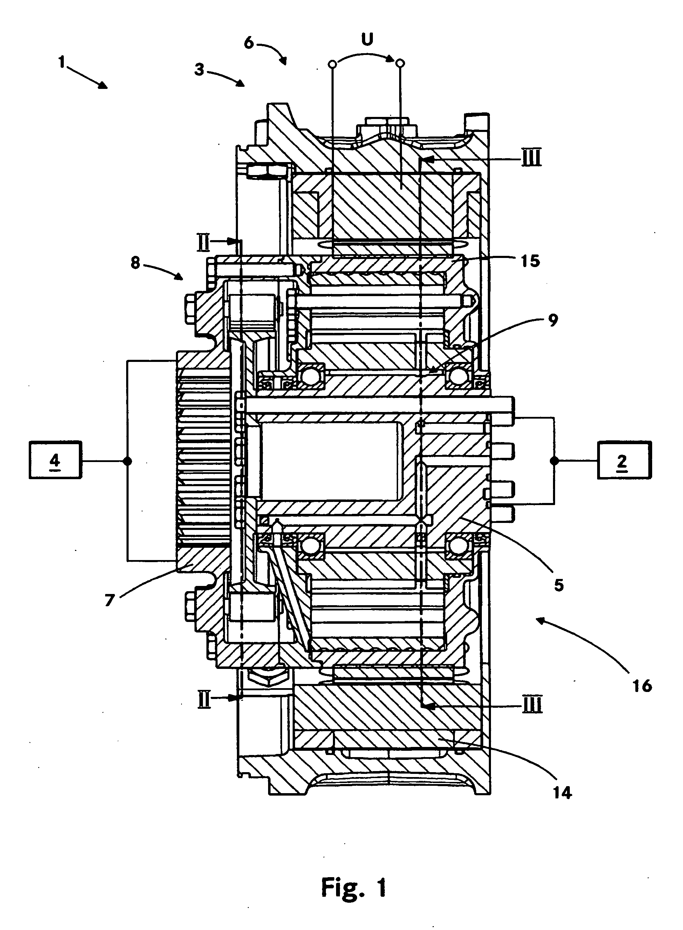

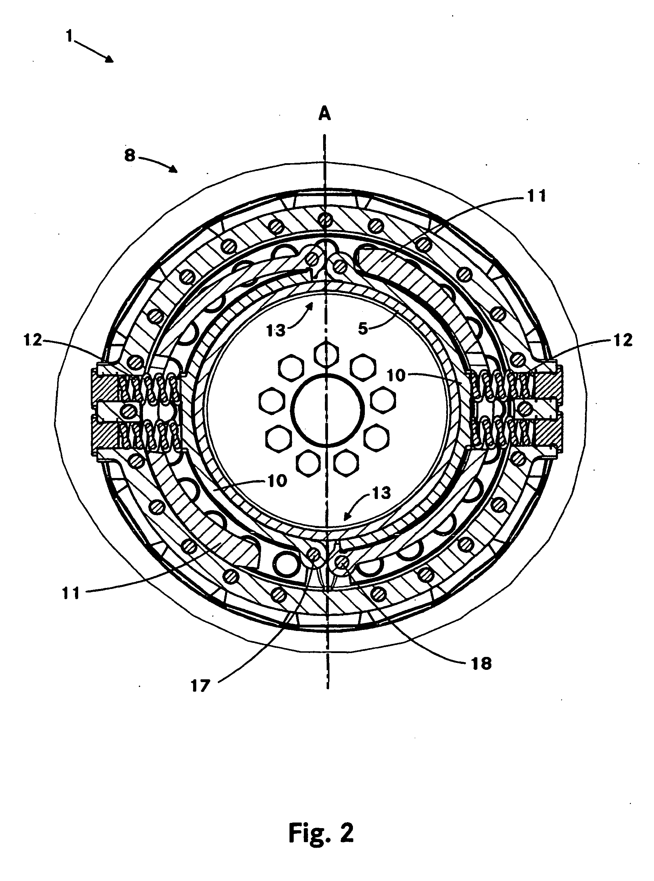

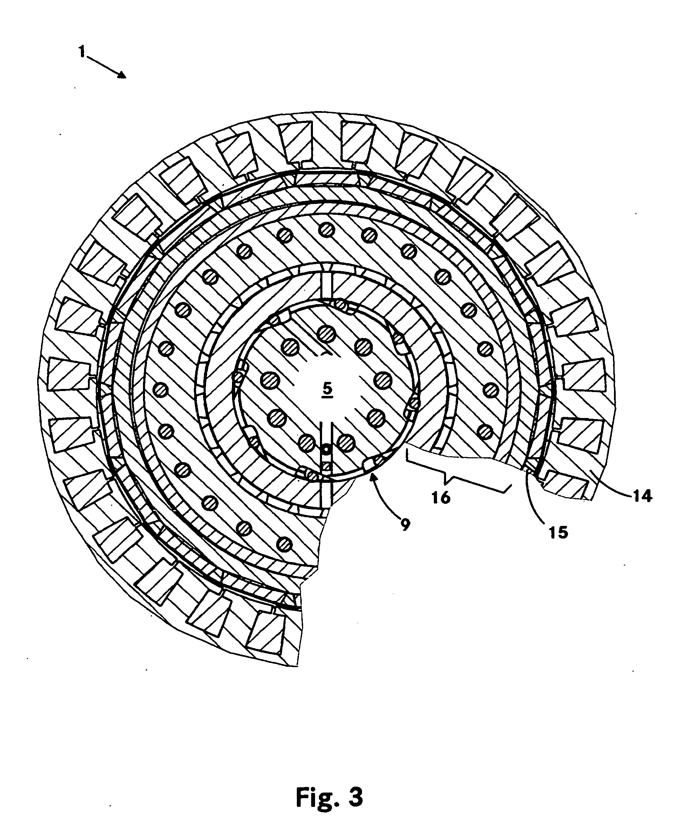

In der Figur 1 ist eine Antriebseinheit 1 für ein Hybridfahrzeug zur Koppelung einer Brennkraftmaschine 2 und/oder einer Elektromaschine 3 mit einem Getriebe 4 dargestellt. Die Antriebseinheit 1 beinhaltet folgende Baugruppen: eine Eingangswelle 5, einen Starter-Generator 6, eine Ausgangswelle 7, eine Kupplung 8 und einen Freilauf 9. Die Eingangswelle 5 ist drehfest mit der Brennkraftmaschine 2 verbunden. Die Ausgangswelle 7 ist drehfest mit dem Getriebe 4 gekoppelt. Die Elektromaschine 3 entspricht dem Starter-Generator 6, welcher sich aus einem ortsfesten Stator 14 und einem Rotor 15 zusammensetzt. Wird am Stator 14 eine Spannung U angelegt, so beginnt sich der Rotor 15 auf Grund der elektromagnetischen Koppelung zu drehen. Der Rotor 15 und die Ausgangswelle 7 sind drehfest miteinander verbunden. Optional kann innerhalb der Antriebseinheit 1 eine metallelastische Kupplung 16 zur Torsionsdämpfung angeordnet sein, zum Beispiel eine Geislinger-Kupplung. In Figur 1 sind zwei Schnittlinien eingezeichnet. Zur Schnittlinie II-II korrespondiert die Darstellung der Figur 2. Zur Schnittlinie III-III gehört die Darstellung der Figur 3.

In Figur 2 ist die Antriebseinheit 1 entlang der Linie II-II aus der Figur 1 dargestellt. Hierin sind zwei unterschiedliche Schaltzustände der Kupplung 8 eingezeichnet: rechts der Symmetrieachse A ist die Kupplung 8 im geschlossenen Zustand dargestellt und links der Symmetrieachse A ist diese im geöffneten Zustand dargestellt. Die Kupplung 8 besteht aus zwei Reibbacken 10, zwei Fliehgewichten 11 und Federn 12. Die Reibbacken 10, die Fliehgewichte 11 und die Federn 12 sind drehfest mit der Ausgangswelle 7 verbunden. Jede Reibbacke 10 ist auf einer Achse 17 drehbar gelagert. Jedes Fliehgewicht 11 ist auf einer Achse 18 drehbar gelagert. Über die Reibbacken 10 wird eine reibschlüssige Verbindung von der Eingangswelle 5 zur Ausgangswelle 7 hergestellt. Die Federn 12 üben eine in zentripetaler Richtung wirkende Federkraft auf die Reibbacken 10 aus. In Nähe der Drehachse 18 ist an jedem Fliehgewicht 11 eine Nocke 13 ausgebildet.

### Die Kupplung 8 besitzt folgende Funktionalität:

Bei stehender Ausgangswelle 7 werden die Reibbacken 10 durch die Federn 12 im Reibschluss mit der Eingangswelle 5 gehalten. Die Fliehgewichte 11 kommen unmittelbar am äußeren Umfang der entsprechenden Reibbacke 10 zur Anlage. Dieser Zustand entspricht der rechten Zeichnungshälfte der Figur 2. In einem vorgebbaren Drehzahlbereich, zum Beispiel 300 bis 500 Umdrehungen, bewegen sich die Fliehgewichte 11 auf Grund der Zentrifugalkraft radial nach außen. Über die Nocke 13 des Fliehgewichts 11 wird der Reibschluss der entsprechenden Reibbacke 10 zur Eingangswelle 5 verringert. Die Kupplung 8 ist im schlupfenden Zustand. Oberhalb eines Drehzahl-Grenzwerts der Ausgangswelle 7, zum Beispiel 500 Umdrehungen, befinden sich die Fliehgewichte 11 am Endanschlag, wodurch über die Nocke 13 die entsprechende Reibbacke 10 vollständig von der Eingangswelle 5 abgehoben wird. Die Kupplung 8 ist jetzt vollständig geöffnet. Dieser Zustand ist in der linken Zeichnungshälfte der Figur 2 abgebildet.

In Figur 3 ist die Antriebseinheit 1 entlang der Linie III-III aus der Figur 1 dargestellt. Zur Verdeutlichung wurde bei dieser Darstellung ein Kreissegment ausgespart. Das Bezugszeichen 9 zeigt den Freilauf, hier ein Klemmkörper-Freilauf, welcher sich an der Eingangswelle 5 und der metallelastischen Kupplung 16 abstützt. Ebenfalls dargestellt sind der Stator 14 und Rotor 15 des Starter-Generators 6. Der Freilauf 9 befindet sich dann in der Klemmstellung, wenn das Drehmoment der Eingangswelle 5 größer ist als das Drehmoment des Rotors 15 bzw. des Innensterns der metallelastischen Kupplung 16. Im umgekehrten Fall, wenn das Drehmoment des Rotors 15 größer als das Drehmoment der Eingangswelle 5 ist, wird der Freilauf 9 überrollt. Die Kupplung 8 verriegelt im geschlossenen Zustand den Freilauf 9, da beide parallel angeordnet sind.

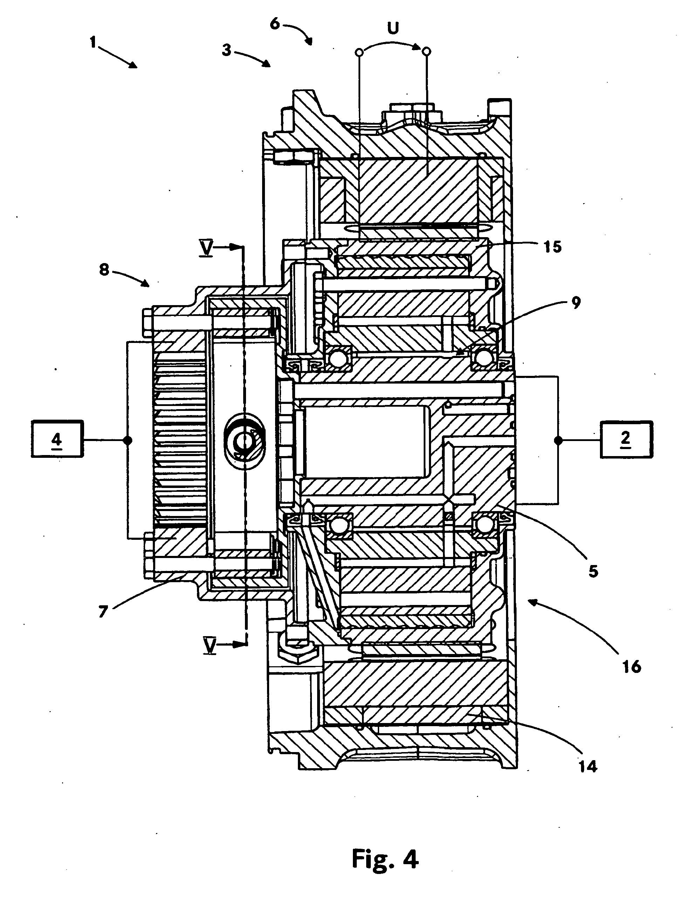

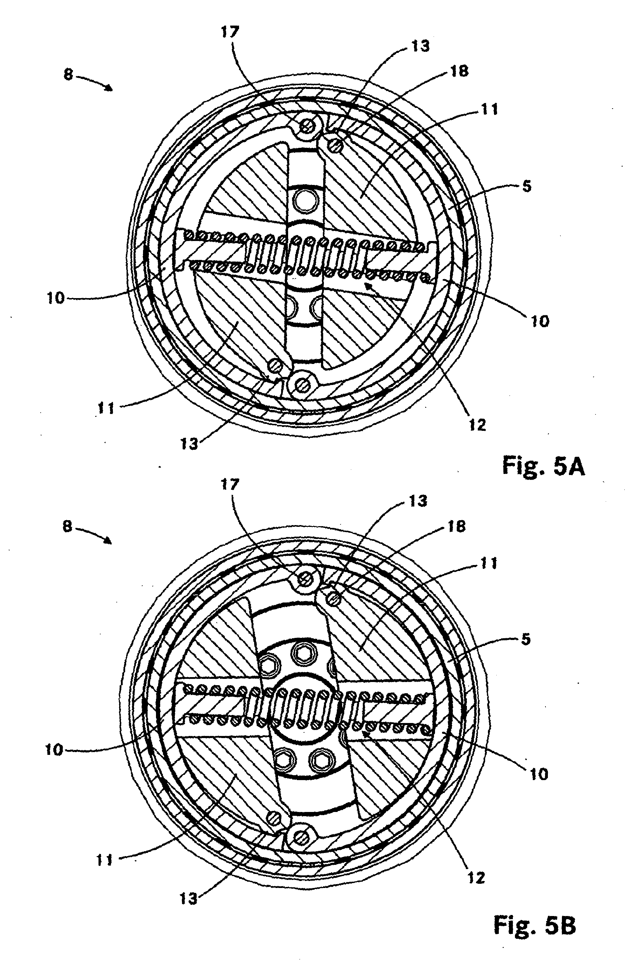

In Figur 4 ist die Antriebseinheit 1 in einer zweiten Ausführungsform dargestellt. Bei dieser Ausführungsform ist die Kupplung 8 innerhalb der Eingangswelle 5 angeordnet. Eine genauere Beschreibung erfolgt in Verbindung mit der Figur 5, in welcher ein Schnitt entlang der Linie V-V der Figur 4 dargestellt ist. Die Antriebseinheit 1 der Figur 4 beinhaltet die gleichen Baugruppen und funktionalen Zusammenhänge wie die Antriebseinheit 1 der Figur 1, so dass die dortige Beschreibung gilt.

In Figur 5 ist ein Schnitt entlang der Linie V-V aus der Figur 4 dargestellt. Die Figur 5 besteht aus den beiden Teilfiguren 5A und 5B. In Figur 5A ist die Kupplung 8 im geschlossenen Zustand bzw. in der Figur 5B im geöffneten Zustand dargestellt. Die weitere Erläuterung erfolgt gemeinsam für die Figuren 5A und 5B. Die Kupplung 8 ist innerhalb der Eingangswelle 5 angeordnet. Die Kupplung 8 besteht aus zwei Reibbacken 10, zwei Fliehgewichten 11 und zumindest einer Feder 12. Die Reibbacken 10 sind um die Achse 17 drehbar. Die Fliehgewichte 11 sind auf der Achse 18 drehbar gelagert. Die Feder 12 übt eine in zentrifugaler Richtung wirkende Federkraft auf die Reibbacken 10 aus. Die Reibbacken 10, Fliehgewichte 11 und Feder 12 sind mit der Ausgangswelle 7 gekoppelt, das heißt, diese Bauteile drehen sich mit deren Drehzahl.

Die Kupplung 8 besitzt folgende Funktionalität:

Bei einer stehenden Ausgangswelle 7 werden die Reibbacken 10 durch die Feder 12 im Reibschluss mit der Eingangswelle 5 gehalten. Die Kupplung 8 ist geschlossen. Mit zunehmender Drehzahl der Ausgangswelle 7 wird auf die Fliehgewichte 11 eine Zentrifugalkraft ausgeübt, so dass diese sich radial nach außen bewegen. Über die Nocke 13 wird daher die entsprechende Reibbacke 10 von der Eingangswelle 5 angehoben. Der Reibschluss zwischen der Reibbacke 10 und der Eingangswelle 5 verringert sich dadurch. Die Kupplung 8 ist im schlupfenden Zustand. Bei einer Drehzahl der Ausgangswelle größer einem Grenzwert, zum Beispiel 500 Umdrehungen, heben die Fliehgewichte 11 über die Nocken 13 (Figur 5B) die Reibbacken 10 vollständig von der Eingangswelle 5 ab. Die Kupplung ist geöffnet. Es besteht somit keine reibschlüssige Verbindung mehr von der Eingangswelle 5 auf die Ausgangswelle 7.

Für die Antriebseinheit 1 der Figuren 1 bis 5 ergibt sich für die unterschiedlichen Betriebsweisen folgende Funktionalität:

Im Ausgangszustand sind die Brennkraftmaschine 2 und die Elektromaschine 3 deaktiviert. Die Kupplung 8 ist geschlossen, da die Federn 12 die Reibbacken 10 im Reibschluss mit der Eingangswelle 5 halten.

Zum Starten der Brennkraftmaschine 2 wird der Stator 14 mit der Spannung U beaufschlagt. Auf Grund der elektromagnetischen Koppelung beginnt sich der Rotor 15, die Ausgangswelle 7 und die Eingangswelle 5 zu drehen. Der Freilauf 9 wird nicht überrollt, da er über die Kupplung 8 gesperrt ist. In einem vorgebbaren Drehzahlbereich, zum Beispiel 300 bis 500 Umdrehungen, geht die Kupplung 8 in den schlupfenden Zustand über. Oberhalb eines Drehzahlwerts von zum Beispiel 500 Umdrehungen ist die Kupplung 8 vollständig geöffnet. Durch das Einspritzen von Kraftstoff in die Brennräume erhöht sich die Drehzahl der Brennkraftmaschine 2 und damit die Drehzahl der Eingangswelle 5 bis auf die Leerlaufdrehzahl der Brennkraftmaschine 2, zum Beispiel 700 Umdrehungen. In diesem Betriebszustand wird das Moment der Brennkraftmaschine 2 von der Eingangswelle 5 über den Freilauf 9 auf den Rotor 15 bzw. Ausgangswelle 7 übertragen. Mit Erreichen der Leerlaufdrehzahl kann dann der Starter-Generator 6 deaktiviert werden.

Im verbrennungsmotorischen Betrieb ist die Kupplung 8 vollständig geöffnet. Diese überträgt kein Moment. Das von der Brennkraftmaschine 2 abgegebene Moment wird ausschließlich über den Freilauf 9 auf die Ausgangswelle 7 oder optional über den Freilauf 9 auf die metallelastische Kupplung 16 und weiter auf die Ausgangswelle 7 übertragen.

Beim Übergang vom verbrennungsmotorischen Betrieb in den elektromotorischen Betrieb wird die Elektromaschine 3 aktiviert. Sobald die Drehzahl des Rotors 15 höher ist als die Drehzahl der Eingangswelle 5 wird der Freilauf 9 überrollt. Die Brennkraftmaschine 2 kann dann deaktiviert werden. Zum Wiederstarten der Brennkraftmaschine aus dem elektromotorischem Betrieb wird zunächst die Drehzahl der Elektromaschine 3 soweit abgesenkt, bis die Kupplung 8 sich zu schließen beginnt. Über die sich schließende Kupplung 8 wird das Moment des Rotors 15 auf die Eingangswelle 5 und damit auf die Brennkraftmaschine 2 übertragen. Danach kann der zuvor beschriebene Startvorgang ausgeführt werden.

Mit der beschriebenen Antriebseinheit 1 ist ein Parallelbetrieb von Elektromaschine 3 und Brennkraftmaschine 2 ebenfalls möglich. Bei dieser Betriebsweise ist die Kupplung 8 vollständig geöffnet. Die Momentübertragung erfolgt daher ausschließlich über den Freilauf 9.

Aus der Beschreibung ergeben sich für die Erfindung folgende Vorteile:
- die Antriebseinheit 1 enthält ausschließlich passive Elemente zur Steuerung der Übergänge der Betriebsweisen; daher sind keine Betätigungsmedien erforderlich, wodurch die Antriebseinheit 1 robust und betriebssicher ist;
- die Kupplung 8 überträgt lediglich das Moment zum Starten der Brennkraftmaschine, wodurch die Kupplung wenig Bauraum benötigt;
- für die Umsetzung der Erfindung werden Standard-Bauteile verwendet.

### Bezugszeichen

- 1: Antriebseinheit
- 2: Brennkraftmaschine
- 3: Elektromaschine
- 4: Getriebe
- 5: Eingangswelle
- 6: Starter-Generator
- 7: Ausgangswelle
- 8: Kupplung
- 9: Freilauf
- 10: Reibbacke
- 11: Fliehgewicht
- 12: Federn
- 13: Nocke
- 14: Stator
- 15: Rotor
- 16: metallelastische Kupplung
- 17: Drehachse Reibbacke
- 18: Drehachse Fliehgewicht

## Patentansprüche

1. Antriebseinheit (1) für ein Hybridfahrzeug zur Koppelung einer Brennkraftmaschine (2) und/oder Elektromaschine (3) mit einem Getriebe (4), mit einer Eingangswelle (5), welche drehfest mit der Brennkraftmaschine (2) verbunden ist, mit einem Starter-Generator (6), welcher zugleich als Elektromaschine (3) dient, mit einer Ausgangswelle (7), welche drehfest mit dem Getriebe (4) verbunden ist, wobei der Starter-Generator (6) sowie die Brennkraftmaschine (2) auf die Ausgangswelle (7) wirken, mit einer Kupplung (8) zur Koppelung der Eingangswelle (5) mit der Ausgangswelle (7), wobei die Kupplung (8) drehzahlabhängig von der Ausgangswelle (7) ist, und mit einem parallel zur Kupplung (8) angeordneten Freilauf (9) zur Koppelung der Eingangswelle (5) und Ausgangswelle (7),
**dadurch gekennzeichnet,**
**dass** zumindest die Eingangswelle (5), der Starter-Generator (6), die Ausgangswelle (7), die Kupplung (8) sowie der Freilauf (9) innerhalb der Antriebseinheit (1) angeordnet sind, im verbrennungsmotorischen Betrieb die Kupplung (8) vollständig geöffnet ist und das von der Brennkraftmaschine (2) abgegebene Moment ausschließlich über den Freilauf (9) auf die Ausgangswelle (7) übertragen wird.

2. Antriebseinheit (1) nach Anspruch 1
**dadurch gekennzeichnet,**
**dass** die Kupplung (8) aus Reibbacken (10) zur reibschlüssigen Verbindung der Eingangswelle (5) mit der Ausgangswelle (7), Fliehgewichten (11) zur Festlegung des Reibschlusses der Reibbacken (10) und aus Federn (12) zum Ausüben einer Federkraft auf die Reibbacken (10) besteht, wobei die Reibbacken (10), die Fliehgewichte (11) und die Federn (12) drehfest mit der Ausgangswelle (7) verbunden sind.

3. Antriebseinheit (1) nach Anspruch 2,
**dadurch gekennzeichnet,**
**dass** die Fliehgewichte (11) jeweils eine Nocke (13) zum Aufheben des Reibschlusses zwischen der entsprechenden Reibbacke (10) und der Eingangswelle (5) aufweisen.

4. Antriebseinheit (1) nach den Ansprüchen 2 und 3,
**dadurch gekennzeichnet,**
**dass** die Kupplung (8) um die Eingangswelle (5) angeordnet ist, wobei die Federn (12) eine in zentripetaler Richtung wirkende Federkraft auf die Reibbacken (10) ausüben.

5. Antriebseinheit (1) nach den Ansprüchen 2 und 3,
**dadurch gekennzeichnet,**
**dass** die Kupplung (8) innerhalb der Eingangswelle (5) angeordnet ist, wobei die Federn (12) eine in zentrifugaler Richtung wirkende Federkraft ausüben.

6. Antriebseinheit (1) nach einem der vorausgegangenen Ansprüche,
**dadurch gekennzeichnet,**
**dass** zwischen dem Rotor (15) des Starter-Generators (6) und der Eingangswelle (5) eine metallelastische Kupplung (16) angeordnet ist.

7. Antriebseinheit (1) nach Anspruch 6,
**dadurch gekennzeichnet,**
**dass** der Freilauf (9) sich an der Eingangswelle (5) und der metallelastischen Kupplung (16) abstützt.

## Claims

1. Drive unit (1) for a hybrid vehicle for coupling an internal combustion engine (2) and/or electric machine (3) to a gearbox (4), having an input shaft (5) which is rotationally fixedly connected to the internal combustion engine (2), having a starter-generator (6) which simultaneously serves as an electric machine (3), having an output shaft (7) which is rotationally fixedly connected to the gearbox (4), with the starter-generator (6) and the internal combustion engine (2) acting on the output shaft (7), having a clutch (8) for coupling the input shaft (5) to the output shaft (7), with the clutch (8) being dependent on the rotational speed of the output shaft (7), and having a freewheel (9), which is arranged parallel to the clutch (8), for coupling the input shaft (5) and output shaft (7),
**characterized**
**in that** at least the input shaft (5), the starter-generator (6), the output shaft (7), the clutch (8) and also the freewheel (9) are arranged within the drive unit (1), with the clutch (8) being fully open in the internal combustion engine operating mode, and with the torque output by the internal combustion engine (2) being transmitted to the output shaft (7) exclusively via the freewheel (9).

2. Drive unit (1) according to Claim 1,
**characterized**
**in that** the clutch (8) is composed of friction pads (10) for the frictionally locking connection of the input shaft (5) to the output shaft (7), centrifugal weights (11) for defining the frictional locking action of the friction pads (10), and springs (12) for exerting a spring force on the friction pads (10), with the friction pads (10), the centrifugal weights (11) and the springs (12) being rotationally fixedly connected to the output shaft (7).

3. Drive unit (1) according to Claim 2,
**characterized**
**in that** the centrifugal weights (11) have in each case one cam (13) for eliminating the frictionally locking action between the corresponding friction pad (10) and the input shaft (5).

4. Drive unit (1) according to Claims 2 and 3,
**characterized**
**in that** the clutch (8) is arranged around the input shaft (5), with the springs (12) exerting a spring force, which acts in the centripetal direction, on the friction pads (10).

5. Drive unit (1) according to Claims 2 and 3,
**characterized**
**in that** the clutch (8) is arranged within the input shaft (5), with the springs (12) exerting a spring force which acts in the centrifugal direction.

6. Drive unit (1) according to one of the preceding claims,
**characterized**
**in that** a metal-elastic coupling (16) is arranged between the rotor (15) of the starter-generator (6) and the input shaft (5).

7. Drive unit (1) according to Claim 6,
**characterized**
**in that** the freewheel (9) is supported on the input shaft (5) and on the metal-elastic coupling (16).

## Revendications

1. Unité d'entraînement (1) pour un véhicule hybride pour accoupler un moteur à combustion interne (2) et/ou un moteur électrique (3) à une transmission (4), avec un arbre d'entrée (5), qui est connecté de manière solidaire en rotation au moteur à combustion interne (2), avec un démarreur-générateur (6), qui sert en même temps de moteur électrique (3), avec un arbre de sortie (7), qui est connecté de manière solidaire en rotation à la transmission (4), le démarreur-générateur (6) ainsi que le moteur à combustion interne (2) agissant sur l'arbre de sortie (7), avec un embrayage (8) pour l'accouplement de l'arbre d'entrée (5) à l'arbre de sortie (7), l'embrayage (8) dépendant de la vitesse de rotation de l'arbre de sortie (7), et avec une roue libre (9) disposée parallèlement à l'embrayage (8) pour l'accouplement de l'arbre d'entrée (5) et de l'arbre de sortie (7),
**caractérisée en ce**
**qu'**au moins l'arbre d'entrée (5), le démarreur-générateur (6), l'arbre de sortie (7), l'embrayage (8) ainsi que la roue libre (9) sont disposés à l'intérieur de l'unité d'entraînement (1), en mode de moteur à combustion, l'embrayage (8) est complètement ouvert, et le couple fourni par le moteur à combustion interne (2) est transmis exclusivement par le biais de la roue libre (9) à l'arbre de sortie (7).

2. Unité d'entraînement (1) selon la revendication 1,
**caractérisée en ce que**
l'embrayage (8) se compose de mâchoires de friction (10) pour la connexion par engagement par friction de l'arbre d'entrée (5) à l'arbre de sortie (7), de masselotte (11) pour définir l'engagement de friction des mâchoires de friction (10) et de ressorts (12) pour exercer une force de ressort sur les mâchoires de friction (10), les mâchoires de friction (10), les masselottes (11) et les ressorts (12) étant connectés de manière solidaire en rotation à l'arbre de sortie (7).

3. Unité d'entraînement (1) selon la revendication 2,
**caractérisée en ce que**
les masselottes (11) présentent chacune une came (13) pour supprimer l'engagement de friction entre la mâchoire de friction correspondante (10) et l'arbre d'entrée (5).

4. Unité d'entraînement (1) selon les revendications 2 et 3,
**caractérisée en ce que**
l'embrayage (8) est disposé autour de l'arbre d'entrée (5), les ressorts (12) exerçant une force de ressort agissant dans la direction centripète sur les mâchoires de friction (10).

5. Unité d'entraînement (1) selon les revendications 2 et 3,
**caractérisée en ce que**
l'embrayage (8) est disposé à l'intérieur de l'arbre d'entrée (5), les ressorts (12) exerçant une force de ressort agissant dans la direction centrifuge.

6. Unité d'entraînement (1) selon l'une quelconque des revendications précédentes,
**caractérisée en ce**
**qu'**un embrayage métallique élastique (16) est disposé entre le rotor (15) du démarreur-générateur (6) et l'arbre d'entrée (5).

7. Unité d'entraînement (1) selon la revendication 6,
**caractérisée en ce que**
la roue libre (9) s'appuie sur l'arbre d'entrée (5) et l'embrayage métallique élastique (16).
